# EUROPEAN PATENT APPLICATION

(11) **EP 2 640 019 A1**
(43) Date of publication of application: **18.09.2013**
(21) Application number: 11843637.7
(22) Date of filing: 26.09.2011
(51) Int. Cl.: H04L 12/66, H04L 29/06

(54) **HOME GATEWAY EQUIPMENT AND UPGRADING METHOD THEREOF**

(30) Priority: 24.11.2010 CN 201010556908
(71) Applicant: ZTE Corporation, Shenzhen, Guangdong 518057 (CN)
(72) Inventor: PENG, Kai, Shenzhen Guangdong 518057 (CN); YU, Siliang, Shenzhen Guangdong 518057 (CN)
(74) Representative: Wilson Gunn
(86) International application number: PCT/CN2011/080186
(87) International publication number: WO 2012/068923

(57) **Abstract**

The present disclosure discloses a home gateway equipment and upgrading method thereof. The method includes: responding to a query of a user for acquiring an Internet Protocol (IP) address, assigning an available IP address to the user through a Dynamic Host Configuration Protocol (DHCP) server module preset in a boot program (BOOT) of the home gateway equipment, and assigning an IP address of the home gateway equipment itself to the user as a Domain Name System (DNS) server address; responding to a domain name query of the user, returning a fixed IP address to the user through a DNS server module preset in the BOOT of the home gateway equipment; and completing a local software upgrade of the home gateway equipment according to the fixed IP address. By means of the technical solution of the present disclosure, the cost for the operator to complete fault detection, onsite maintenance, product recall, or the like in this case can be reduced.

## Description

### TECHNICAL FIELD

The present disclosure relates to the field of home gateway technology, and in particular to a home gateway equipment and upgrading method thereof.

### BACKGROUND

Along with the present development of network technology, a home network also starts to be popularized gradually, and a home gateway has entered individual homes and become an essential network equipment.

After a network operator lays out the home gateway equipment for an individual home, a software version corresponding to the home gateway equipment is simultaneously upgraded with the upgrade of developing services, in which a user normally does not take initiative to participate, and the network operator may complete upgrading under a circumstance when the user seldom uses the home gateway equipment, such as at night.

When the operator upgrades the version in batch for home gateways in a region, a certain proportion of gateways will inevitably fail to be upgraded, where there are a number of reasons that causes this failure, such as an unexpected blackout of the region. Due to the failing upgrade, the home gateway equipment at the moment has become completely unusable typically without awareness of the user. In this case, the user is unable to complete initiative upgrade on the home gateway either. Therefore, the operator needs to complete detection, onsite maintenance, or product recall for the fault generated in this case, which significantly increases the operating cost.

### SUMMARY

The present disclosure provides a home gateway equipment and upgrading method thereof, so as to solve the problem in the prior art that the user is unable to complete initiative upgrade on the home gateway when the operator fails to upgrade the home gateway equipment normally, thereby increasing the cost required for the operator to complete maintenance, recall, and detection of the home gateway equipment.

The present disclosure provides a method for upgrading a home gateway equipment, which includes the following steps:
responding to a query of a user for acquiring an Internet Protocol (IP) address, assigning an available IP address to the user through a Dynamic Host Configuration Protocol (DHCP) server module preset in a boot program (BOOT) of the home gateway equipment, and assigning an IP address of the home gateway equipment itself to the user as a Domain Name System (DNS) server address;
responding to a domain name query of the user, returning a fixed IP address to the user through a DNS server module preset in the BOOT of the home gateway equipment; and
completing a local software upgrade of the home gateway equipment according to the fixed IP address.

The present disclosure also provides a home gateway equipment, which includes:
an Internet Protocol (IP) address assigning module configured to, responding to a query of a user for acquiring an IP address, assign an available IP address to the user through a Dynamic Host Configuration Protocol (DHCP) server module preset in a BOOT of the home gateway equipment, and assign an IP address of the home gateway equipment itself to the user as a Domain Name System (DNS) server address;
a domain name resolving module configured to, responding to a domain name query of the user, return a fixed IP address to the user through a DNS server module preset in the BOOT of the home gateway equipment; and
an upgrading module configured to prompt the user to complete a local software upgrade of the home gateway equipment according to the fixed IP address.

The beneficial effects of the present disclosure are as follows:
by implementing functions of a mini DHCP server and DNS server in the boot program (BOOT) of the home gateway equipment, the present disclosure solve the problem in the prior art that the user is unable to complete initiative upgrade on the home gateway when the operator fails to upgrade the home gateway equipment normally, thereby increasing the cost required for the operator to complete maintenance, recall, and detection of the home gateway equipment, such that the operator makes the upgrading process of a software version can be completed in subsequent remediation even if the upgrade of the software version fails, thereby reducing the cost for the operator to complete fault detection, onsite maintenance, product recall, or the like in this case.

### BRIEF DESCRIPTION OF THE DRAWINGS

Fig. 1 shows a flowchart of a method for upgrading a home gateway equipment according to an embodiment of the present disclosure;
Fig. 2 shows a schematic diagram of function modules of a home gateway according to an embodiment of the present disclosure;
Fig. 3 shows a signalling flowchart of detailed processing steps of the method for upgrading a home gateway equipment according to an embodiment of the present disclosure;
Fig. 4 shows a schematic diagram of the structure of the home gateway equipment according to an embodiment of the present disclosure; and
Fig. 5 shows a schematic diagram of the networking relationship according to an embodiment of the present disclosure.

### DETAILED DESCRIPTION

When a home gateway software version fails to upgrade, the common phenomenon is that a user cannot connect to the Internet, nor log onto a home gateway equipment to complete basic detection such as configuration inquiry or the like under a completely paralyzed state. In order to solve the aforementioned problem, the present disclosure provides a method for upgrading a home gateway equipment, providing under the above state, a mechanism which reminds the user, when the user performs a normal operation such as surfing the Internet or the like without being aware of the failure, of the software upgrade failure and guides the user to further complete a local upgrade of the software version. An embodiment of the present disclosure can implement functions of one mini DHCP server and DNS server in the BOOT utilizing the feature that the BOOT of the equipment is not damaged although the software version fails to be upgraded; even if the software version is damaged, the home gateway can still assign an address to a connected Person Computer (PC) normally, and implement a deception in the DNS server and redirect the domain name of an operation query of the user, such as surfing the Internet or the like, to a page for prompting version damage and upgrading. The present disclosure is further elaborated below with reference to the figures and embodiments. It should be understood that specific embodiments described here is only intended to interpret the present disclosure instead of limiting the present disclosure.

### Method embodiments

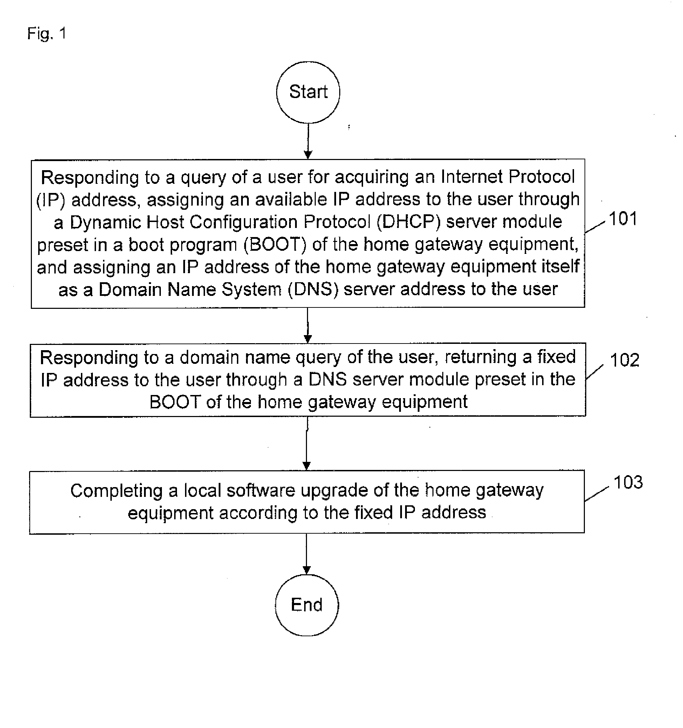

According to an embodiment of the present disclosure, a method for upgrading a home gateway equipment is provided and used for the case that a normal upgrade of the home gateway equipment fails. Fig. 1 shows a flowchart of a method for upgrading a home gateway equipment according to an embodiment of the present disclosure; as shown in Fig. 1, the method for upgrading a home gateway equipment according to an embodiment of the present disclosure includes following processing steps:
Step 101: responding to a query of a user for acquiring an Internet Protocol (IP) address, an available IP address is assigned to the user through a Dynamic Host Configuration Protocol (DHCP) server module preset in a boot program (BOOT) of the home gateway equipment, and an IP address of the home gateway equipment itself is assigned to the user as a Domain Name System (DNS) server address.
   Specifically, a purpose of implementing the DHCP server in the BOOT is to ensure that the user can communicate with the home gateway. A PC at a user side will normally access the home gateway by obtaining an IP address dynamically, and it is a function of the DHCP server in the software version to implement address assignment; after the software version is damaged, a DHCP query of the PC cannot be acknowledged normally. Therefore, we implement in the BOOT a mini DHCP server, which may not account for some complicated functions such as IP address assigning policy or the like, and simply assign one available IP address to the PC just to ensure that the PC can communicate with the home gateway. Another role of the DHCP server in the BOOT is to assign the IP address of the equipment itself to the PC as a DNS server address.
Step 102: responding to a domain name query of the user, a fixed IP address is returned to the user through a DNS server module preset in the BOOT of the home gateway equipment.
   Wherein, the fixed IP address is an address of an interface that facilitates the user in completing the local software upgrade. Preferably, the fixed IP address can be the IP address of the home gateway equipment itself.
   Specifically, the interface that facilitates the user in completing the local software upgrade includes: an interface configured to prompt the user that the current software version has been damaged and guide the user to complete the local software upgrade. A purpose of implementing the DHCP server in the BOOT is to remind of the software upgrade failure and guide the user to complete the local upgrade of the software version. Even if the software version has been damaged, the user still acquires the IP address and the DNS server address and attempts to surf the Internet normally based on the previous work; when surfing the Internet, the user may first initiate a domain name query, and therefore we implements in the BOOT a mini DNS server, which server gives a fixed acknowledgement to any domain name query, that is, directing to an address of the interface configured to prompt the user that the current software version has been damaged and guide the user to complete the local software upgrade.
Step 103: a local software upgrade of the home gateway equipment is completed according to the fixed IP address.

The following processing steps are specifically included in Step 103: the user accesses the fixed IP address; the user acquires the interface that facilitates the user in completing the local software upgrade, wherein the interface that facilitates the user in completing the local software upgrade includes: an interface configured to prompt the user that the current software version has been damaged and guide the user to complete the local software upgrade; and the user completes the local software upgrade of the home gateway equipment according to the prompt of the interface.

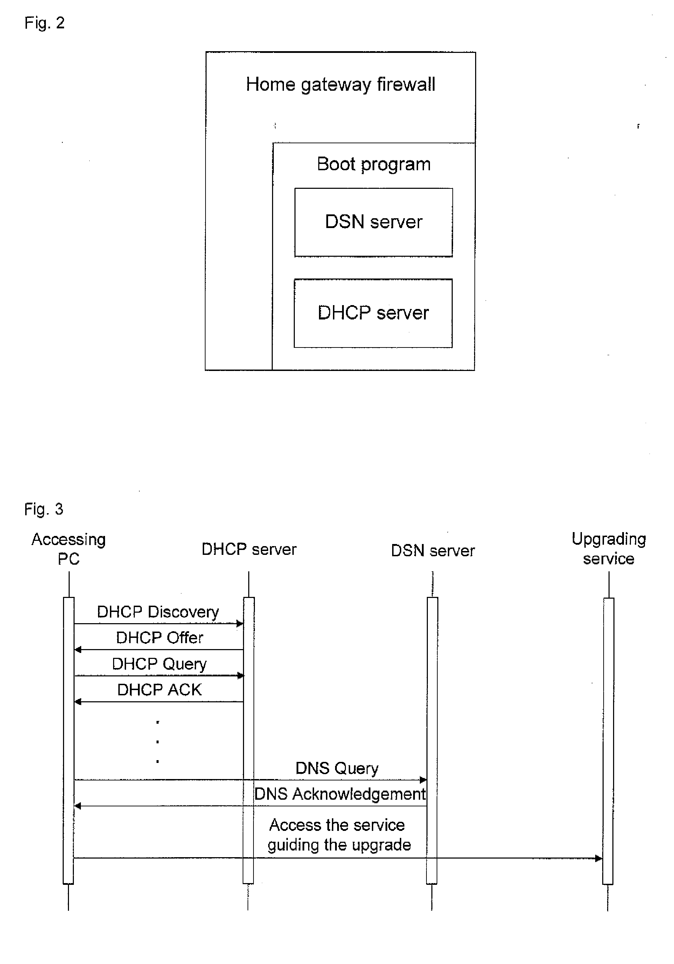

Fig. 2 shows a schematic diagram of function modules of a home gateway according to an embodiment of the present disclosure. As shown in Fig. 2, the BOOT is included in a home gateway firewall, and a DHCP server function and a DNS server function are implemented in the BOOT, wherein the DHCP server function is responsible for processing the domain name query initiated by the PC and returning a redirected IP address, and the DNS server function is responsible for assigning one IP and a DNS to the PC dynamically acquiring an address.

The above technical solution of the embodiment of the present disclosure is illustrated in detail below by taking as an embodiment the case in which the operator completes batch upgrade of home gateways in a certain neighbourhood at night and the neighbourhood blacks out suddenly.

Fig. 3 shows a signalling flowchart of detailed processing steps of the method for upgrading a home gateway equipment according to an embodiment of the present disclosure. As shown in Fig. 3, the following processing steps are specifically included:
Step 1: the software version of the home gateway has been damaged, and at the moment, the home gateway runs in a BOOT mode; the PC at the user side goes online and begins to acquire an address automatically, and the PC at the user side sends a DHCP Discovery to the DHCP server;
Step 2: the DHCP server sends a DHCP Offer to the PC at the user side;
Step 3: the PC at the user side initiates a DHCP query (DHCP Discovery) to the DHCP server;
Step 4: the DHCP server in the BOOT program of the home gateway gives an acknowledgement (DHCP ACK), and assigns an IP address 192.168.1.2 and a DNS address 192.168.1.1 to the PC at the user side; and the PC at the user side acquires the IP address and the DNS address;
Step 5: after the PC at the user side acquires the IP address, the user begins to surf the Internet, and initiates a DNS query (DNS Query) for the user to surf the Internet;
Step 6: the domain name query is processed by the BNS Sever in the BOOT program of the home gateway, the DNS server returns a DNS Response to the PC at the user side, and regardless of what domain name is queried by the PC at the user side, a resolved IP address of 192.168.1.1 is always returned in the DNS Response, which address is a service IP prompting that the software version has been damaged and further guiding the user to complete the upgrade, that is, the DNS server returns a "false" resolving result directing to the service IP used for guiding the upgrade; and
Step 7: the PC receives the acknowledging IP of the DNS, continues the access, and is guided to a service prompting that the software version has been damaged and further guiding the user to complete the upgrade.

By means of the above processing steps, the whole application of optimizing the upgrade of the home gateway equipment based on a DHCP and DNS mechanism in the BOOT program is completed.

By means of the above processing steps, the operator makes the upgrading process of a software version can be completed in subsequent remediation even if the upgrade of the software version fails, reducing the cost for the operator to complete fault detection, onsite maintenance, product recall, or the like in this case.

### Device embodiments

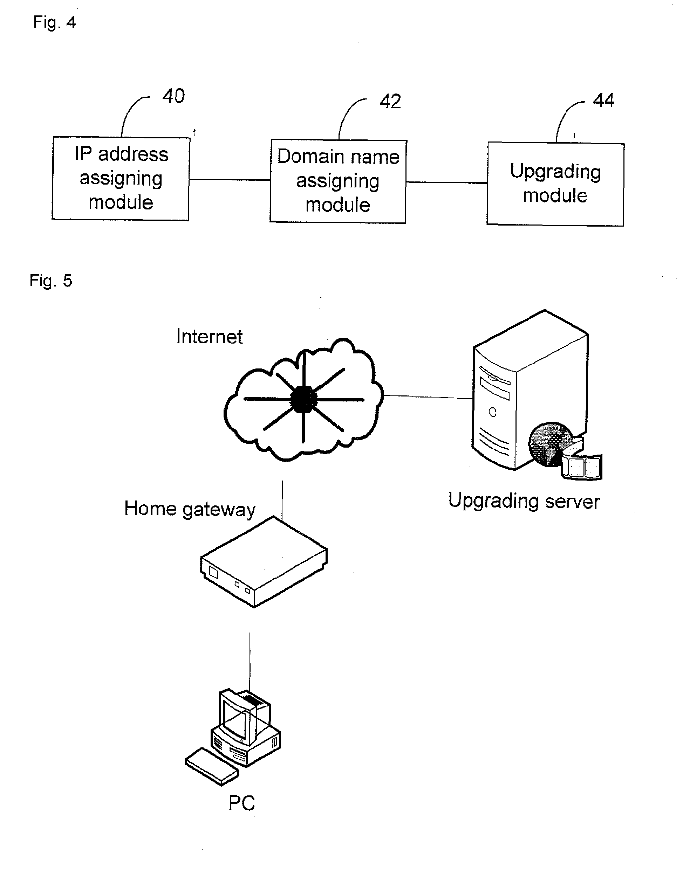

A home gateway equipment is provided according to an embodiment of the present disclosure. Fig. 4 shows a schematic diagram of the structure of the home gateway equipment according to an embodiment of the present disclosure. As shown in Fig. 4, the home gateway equipment according to the embodiment of the present disclosure includes: an IP address assigning module 40, a domain name assigning module 42 and an upgrading module 44.

Before the home gateway equipment according to the embodiment of the present disclosure is illustrated, a networking relationship according to an embodiment of the present disclosure is illustrated at first. Fig. 5 shows a schematic diagram of the networking relationship according to an embodiment of the present disclosure. As shown in Fig. 5, an upgrading server is connected to the home gateway through the Internet; after being connected to the home gateway, the PC at the user side is connected to the Internet through the home gateway.

Each of the modules according to the embodiment of the present disclosure is illustrated in detail below.

The IP address assigning module 40 is configured to, responding to a query of a user for acquiring an IP address, assign an available IP address to the user through a DHCP server module preset in a BOOT of the home gateway equipment, and assign an IP address of the home gateway equipment itself as a DNS server address to the user.

Specifically, a purpose of implementing the DHCP server in the BOOT is to ensure that the user can communicate with the home gateway. A PC at a user side will normally access the home gateway by obtaining an IP address dynamically, and it is a function of the DHCP server in the software version to implement address assignment; after the software version is damaged, a DHCP query of the PC cannot be acknowledged normally. Therefore, we implement in the BOOT a mini DHCP server, which may not account for some complicated functions such as IP address assigning policy or the like, and simply assign one available IP address to the PC just to ensure that the PC can communicate with the home gateway. Another role of the DHCP server in the BOOT is to assign the IP address of the equipment itself to the PC as a DNS server address.

The domain name assigning module 42 is configured to, responding to a domain name query of the user, return a fixed IP address to the user through a DNS server module preset in the BOOT of the home gateway equipment.

Wherein, the fixed IP address is an address of an interface that facilitates the user in completing the local software upgrade. Preferably, the fixed IP address can be the IP address of the home gateway equipment itself.

Specifically, the interface that facilitates the user in completing the local software upgrade includes: an interface configured to prompt the user that the current software version has been damaged and guide the user to complete the local software upgrade. A purpose of implementing the DHCP server in the BOOT is to remind of the software upgrade failure and guide the user to complete the local upgrade of the software version. Even if the software version has been damaged, the user still acquires the IP address and the DNS server address and attempts to surf the Internet normally based on the previous work; when surfing the Internet, the user may first initiate a domain name query, and therefore we implements in the BOOT a mini DNS server, which server gives a fixed acknowledgement to any domain name query, that is, directing to an address of the interface configured to prompt the user that the current software version has been damaged and guide the user to complete the local software upgrade.

The upgrading module 44 is configured to prompt the user to complete a local software upgrade of the home gateway equipment according to the fixed IP address. The upgrading module 44 is specifically configured to display to the user an interface configured to prompt the user that the current software version has been damaged and guide the user to complete the local software upgrade according to access of the fixed IP address by the user, to enable the user to complete the local software upgrade of the home gateway equipment according to the prompt of the interface.

To sum up, by implementing functions of a mini DHCP server and DNS server in the boot program (BOOT) of the home gateway equipment, the embodiments of the present disclosure solve the problem in the prior art that the user is unable to complete initiative upgrade on the home gateway when the operator fails to upgrade the home gateway equipment normally, thereby increasing the cost required for the operator to complete maintenance, recall, and detection of the home gateway equipment, such that the operator makes the upgrading process of a software version can be completed in subsequent remediation even if the upgrade of the software version fails, thereby reducing the cost for the operator to complete fault detection, onsite maintenance, product recall, or the like in this case.

The above are only preferable embodiments of the present disclosure, and are not intended to limit the scope of protection of the present disclosure. Any modifications, equivalent substitutions, improvements or the like made within the concept and principle of the present disclosure shall fall within the scope of protection of the present disclosure.

## Claims

1. A method for upgrading a home gateway equipment, used in a case when normal upgrade of the home gateway equipment fails, comprising:
responding to a query of a user for acquiring an Internet Protocol (IP) address, assigning an available IP address to the user through a Dynamic Host Configuration Protocol (DHCP) server module preset in a boot program (BOOT) of the home gateway equipment, and assigning an IP address of the home gateway equipment itself to the user as a Domain Name System (DNS) server address;
responding to a domain name query of the user, and returning a fixed IP address to the user through a DNS server module preset in the BOOT of the home gateway equipment; and
completing a local software upgrade of the home gateway equipment according to the fixed IP address.

2. The method according to claim 1, wherein the fixed IP address is the IP address of the home gateway equipment itself.

3. The method according to claim 1, wherein the completing a local software upgrade of the home gateway equipment according to the fixed IP address comprises:
accessing, by the user, the fixed IP address; and acquiring, by the user, an interface that facilitates the user in completing the local software upgrade;
the interface that facilitates the user in completing the local software upgrade comprises an interface configured to prompt the user that a current software version has been damaged and guide the user to complete the local software upgrade; and
completing, by the user, the local software upgrade of the home gateway equipment according to the prompt of the interface.

4. A home gateway equipment, comprising:
an Internet Protocol (IP) address assigning module configured to, responding to a query of a user for acquiring an IP address, assign an available IP address to the user through a Dynamic Host Configuration Protocol (DHCP) server module preset in a BOOT of the home gateway equipment, and assign an IP address of the home gateway equipment itself to the user as a Domain Name System (DNS) server address;
a domain name resolving module configured to, responding to a domain name query of the user, return a fixed IP address to the user through a DNS server module preset in the BOOT of the home gateway equipment; and
an upgrading module configured to prompt the user to complete a local software upgrade of the home gateway equipment according to the fixed IP address.

5. The home gateway equipment according to claim 4, wherein the fixed IP address is the IP address of the home gateway equipment itself.

6. The home gateway equipment according to claim 4, wherein the upgrading module configured to prompt the user to complete a local software upgrade of the home gateway equipment according to the fixed IP address is configured to:
display to the user an interface that facilitates the user in completing the local software upgrade according to access of the fixed IP address by the user, wherein
the interface that facilitates the user in completing the local software upgrade comprises an interface configured to prompt the user that a current software version has been damaged and guide the user to complete the local software upgrade, and
the user completes the local software upgrade of the home gateway equipment according to the prompt of the interface.
